# EUROPEAN PATENT SPECIFICATION

(11) **EP 3 380 544 B1**
(45) Date of publication and mention of the grant of the patent: **05.01.2022**
(21) Application number: 16861678.7
(22) Date of filing: 07.11.2016
(51) Int. Cl.: C08H 7/00, C07G 1/00, C04B 24/24, C04B 11/00, B01F 17/00, C09C 3/10

(54) **ALKALI-O2 OXIDIZED LIGNIN AS DISPERSANT**
ALKALI-O2-OXIDIERTES LIGNIN ALS DISPERGIERMITTEL
LIGNINE OXYDÉE EN MILIEU ALCALIN PAR L'O2 UTILISÉE COMME DISPERSANT

(30) Priority: 06.11.2015 FI 20155815
(43) Date of publication of application: 03.10.2018
(73) Proprietor: Teknologian Tutkimuskeskus VTT OY, 02150 Espoo (FI)
(72) Inventor: KALLIOLA, Anna, 02044 Vtt (FI); LIITIÄ, Tiina, 02044 Vtt (FI); TAMMINEN, Tarja, 02044 Vtt (FI); VEHMAS, Tapio, 02044 Vtt (FI)
(74) Representative: Laine IP Oy
(86) International application number: PCT/FI2016/050784
(87) International publication number: WO 2017/077198

(56) References cited:
- WO-A1-2011/061399
- WO-A1-2015/049424
- WO-A1-2015/049424
- JP-A- H07 224 135
- US-A- 3 910 873
- US-A- 3 910 873
- US-A- 4 611 659
- US-A- 4 611 659
- US-A- 5 811 527
- US-A- 5 811 527
- A. KALLIOLA ET AL: "Alkali-O2 oxidized lignin - A bio-based concrete plasticizer", INDUSTRIAL CROPS AND PRODUCTS., vol. 74, 22 May 2015 (2015-05-22), pages 150-157, XP055381891, NL ISSN: 0926-6690, DOI: 10.1016/j.indcrop.2015.04.056
- Anna Kalliola: "Chemical and enzymatic oxidation using molecular oxygen as a means to valorize technical lignins for material applications", VTT Technical Research Centre of Finland Ltd, 14 August 2015 (2015-08-14), pages 1-144, XP055381893, Retrieved from the Internet: URL:http://www.vtt.fi/inf/pdf/science/2015 /S99.pdf [retrieved on 2017-06-15]
- KALLIOLA, A. ET AL.: 'Alkali-02 oxidized lignin - A bio-based concrete plasticizer' INDUSTRIAL CROPS AND PRODUCTS vol. 74, 22 May 2015, pages 150 - 157, XP055381891
- KALLIOLA, A.: 'Chemical and enzymatic oxidation using molecular oxygen as a means to valorize technical lignins for material applications' DOCTORAL THESIS VTT TECHNICAL RESEARCH CENTRE OF FINLAND LTD 14 August 2015, pages 1 - 144, XP055381893

## Description

### FIELD

The present invention relates to modifications of alkali-soluble technical lignins into water-soluble polyelectrolytes, and an alkali-O₂ oxidized lignin thereof for use in various applications, which utilize dispersants.

### BACKGROUND

Solid inorganic particles such as pigments (e.g. titanium oxide, iron-oxide-based colorants and carbon black) and fillers (e.g. calcium carbonate and talc) are important components of paints, coatings and inks, and need to be dispersed and stabilized well in the formulations to assure consistent color, quality and durability. Inorganic particles, such as calcium carbonate, titanium oxide, talc, gypsum, and kaolin are also utilized in production of paper and board as fillers or coating pigments as well as for the production of construction materials, porcelain and ceramics.

Several types of dispersants and surface active agents exist for the different applications of paint and coatings. In general, synthetic polymeric dispersants (linear or branched molecules) can be divided into high-molecular weight and low molecular weight polymers. High-molecular weight dispersants range lies between 5 000 and 30 000 g/mol. This range includes acrylics, polyurethanes, and polycarboxylic acids. The amount of applied dispersants is typically between 0.3-3.0 percent of applied pigment. Low-molecular weight dispersants range is between 2 000 and 5 000 g/mol. This range includes polyester polyamides, carboxylic acid esters, polyamides, and acrylics. The amount of applied dispersants is typically between 0.5-5.0 percent of applied pigment. In some cases, e.g. for carbon black, relative high dispersant dosing (20%) is required. The demand is driven towards more cost-efficient and environmental-friendly dispersing agents. In coatings, growing water-borne segment has driven the demand for aqueous dispersants

Typically anionic dispersants, such as synthetic polyacrylic acid, are used in the paint and coatings industry to achieve the highest loading of fillers and pigments in the grind phase. Dispersants for example reduce the interactions between the pigment particles and lower the viscosity of the pigment mixture. Higher loadings allow finer grinds that in turn improves the hiding power of the paint so as to extract the maximum value from the pigments. Also, in the other application areas of inorganic fillers and pigments dispersant are used for wetting the pigment particles in water or to plasticize the slurry for better workability. Dispersant are also used in aiding the inorganic pigment (for example kaolin or GCC) grinding in the pigment mine.

Water-soluble lignosulfonates, which are by-products of sulphite pulping, are also used due their highly branched and sulfonic charged structure, but their effect is limited.

At the present, the main source of lignin is the alkaline sulfate (i.e. kraft) process. The soda process, on the other hand, is the predominant process used for chemical pulping of non-wood materials. Also 2^{nd} generation bioethanol production from lignocellulosics provides a source of lignin. Presently only a fraction of the lignin formed during the pulping is separated from the spent pulping liquors and employed in speciality products. Instead, the remaining liquors (and lignin) serve, for example, as biofuel in pulp mills. Thus there is a clear need for further lignin exploitation methods.

WO 2015/049424 describes a process for oxidizing lignin at alkaline conditions and its use as a renewable plasticizer in cement-containing products such as concrete, where the ability of the oxidized lignin to endure alkaline conditions is an advantage. Also Kalliola *et al.* (2015) discusses about alkali-O₂ oxidized lignin as a bio-based concrete plasticizer. However, these publications do not suggest use of an alkali-O₂ oxidized lignin in applications concerning e.g. the aforementioned inorganic pigments, nor disclose its dispersing performance in paints and coatings, nor its effect e.g. as gypsum plasticizer and set-retardant.

JPH07 224135 describes a lignin condensate which provides a dispersant useful for dyes, cement, inorganic and organic pigments, gypsum, coal, aqueous slurry, agrochemicals and ceramics by reacting lignin and amino acid with formaldehyde under aqueous conditions at a specific ratio.

Kraft or soda lignins (among other potential lignins) would be both cost-effective and environmental alternatives to petroleum-based or lignosulfonate-based dispersants. In unmodified form they, however, lack the sufficient efficiency required for such use. Such bio-based dispersing agents with at least equal performance in comparison to synthetic dispersants would be suitable for use in paint and coatings, in paper and board, and in construction materials (such as gypsum mortar and plasterboard), as well as in other application areas relatin to e.g. inorganic and organic pigments.

### SUMMARY OF THE INVENTION

The invention is defined by the features of the independent claims. Some specific embodiments are defined in the dependent claims.

The present invention is based on the finding that alkali-O₂ oxidized lignin shows good dispersing performance, among others, in the case of calcium carbonate or in TiO₂. Also, its effect as gypsum plasticizer and set retardant has been demonstrated herein.

These and other aspects, together with the advantages thereof over known solutions are achieved by the present invention, as hereinafter described and claimed.

Considerable advantages are obtained by means of the invention. With sufficiently improved dispersing properties, alkali-O₂ oxidized lignin stand for a cost-efficient alternative to petroleum-based based dispersants in inorganic and organic pigment pastes. In addition, oxygen is inexpensive and environmentally friendly chemical for treating lignin. Furthermore, the alkali-O₂ oxidation is a simple method to modify only alkali-soluble technical lignins into water-soluble polyelectrolytes. Technical lignins have, besides the cost-competitiveness, the advantage of being based on a renewable resource.

Next, the present technology will be described more closely with reference to certain embodiments.

### EMBODIMENTS

The present technology utilizes conversion of technical lignin into a water-soluble form, which is desired for dispersing purposes, and describes novel alkali-O₂ oxidized lignins as dispersants (and surface active agents) for use especially in inorganic pigments. This present technology aims for example for replacing traditional lignosulfonates and synthetic dispersants.

Basically, dispersants provide stabilization of pigment dispersions by electrostatic and steric stabilization mechanisms. The alkali-O₂ oxidation provides means to convert technical lignin (such as kraft or soda lignin) into a polyelectrolyte that poses surface active properties and is thus suitable for use as a dispersing agent. The alkali-O₂ oxidation can also be used to improve the dispersing properties of initially water-soluble lignosulfonates.

Herein "inorganic pigments" include for example TiO₂, color-pigments (e.g. Fe-oxide based), different forms of gypsum, kaolin, CaCO₃, carbon black and metakaolin.

The alkali-O₂ oxidized lignin is preferably obtained by oxidizing a lignin-containing material, which has been obtained from a lignocellulose biomass, such as wood-based or other plant-based source, one example being pulping liquors, or lignin side streams originating from bioethanol production.

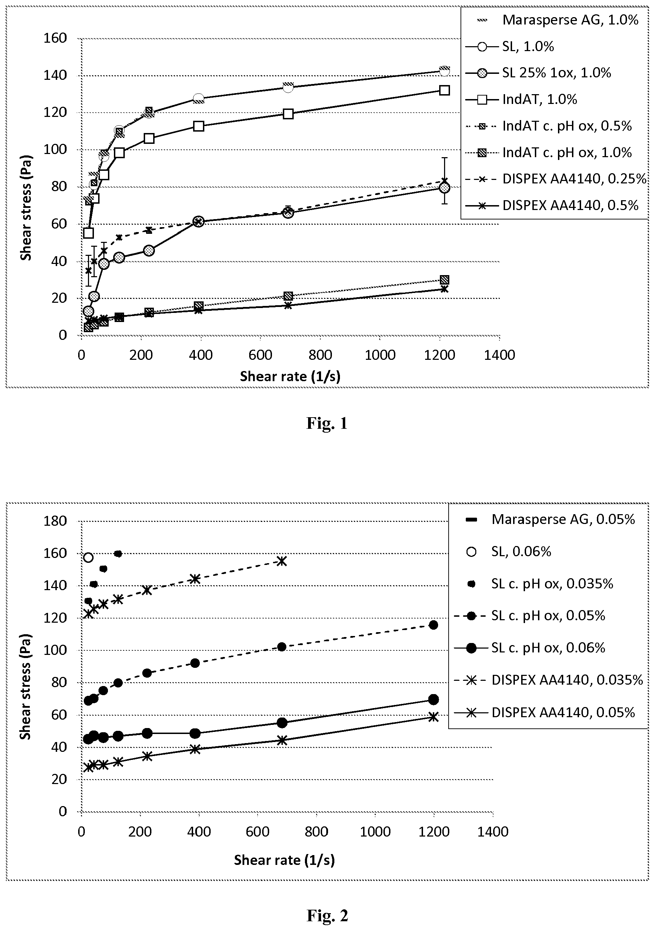

Some of the embodiments of the present invention are described in figures 1 to 7.

Figure 1 is a chart showing the shear stress vs. shear rate of 34 w-% precipitated CaCO₃ (PCC) paste containing different amounts of the dispersants of the present invention (SL 25% 1ox, IndAT c. pH ox), unmodified lignin (SL) or reference dispersants (DISPEX AA4140, Marasperse AG).

Figure 2 is a chart showing the shear stress vs. shear rate of 70 w-% TiO₂ paste containing different amounts of the dispersants of the present invention (SL c. pH ox), unmodified lignin (SL) or reference dispersant (DISPEX AA4140). Paste without a dispersant or with Marasperse AG (0.05%) was too thick to be measured.

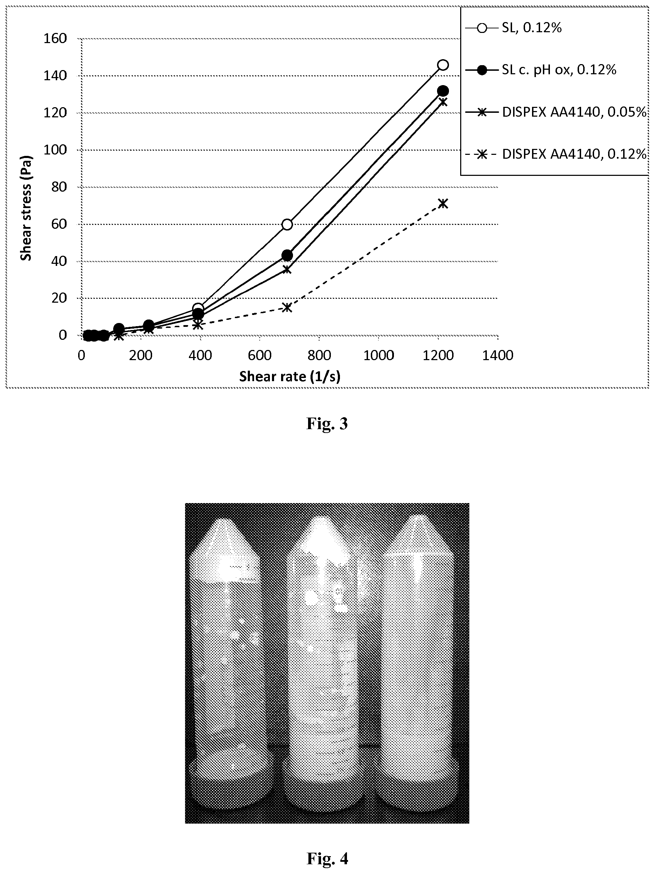

Figure 3 is a chart showing the shear stress vs. shear rate of 50 w-% kaolin (2 µm) paste containing dispersant of the present invention (SL c. pH ox), unmodified lignin (SL) or reference dispersant (DISPEX AA4140).

Figure 4 is a photo illustrating the 3 week storage stability of the dispersed kaolin (2 µm) paste prepared using the dispersant of the present invention (SL c. pH ox, 0.12%) (right). When using reference dispersant (DISPEX AA4140, 0.12% and 0.05%), the kaolin paste did not remain stable any more after 3 weeks of preparing the paste (left and middle).

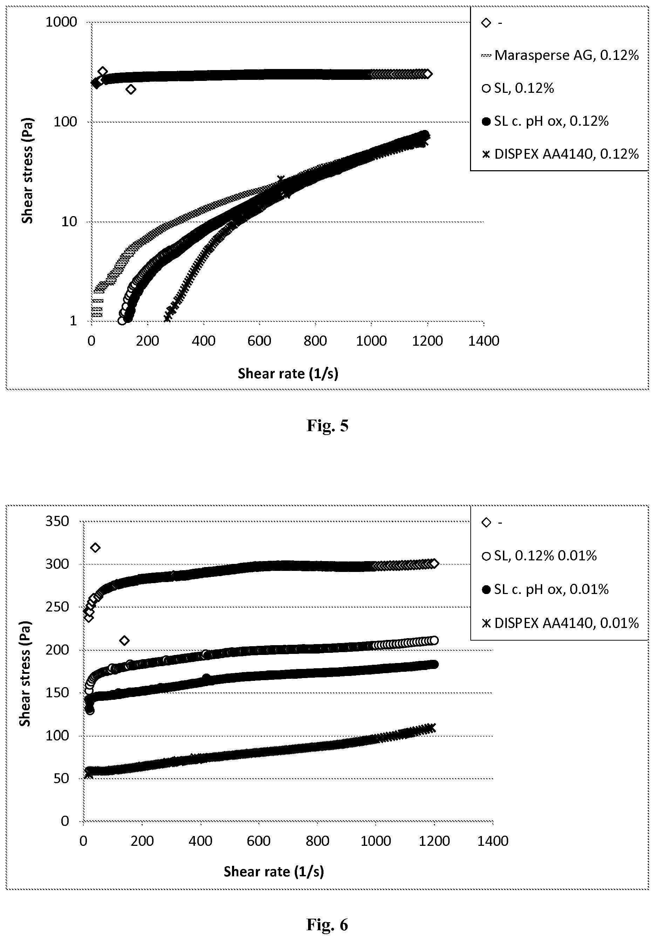

Figures 5 and 6 are charts showing the shear stress vs. shear rate of 50 w-% kaolin (10 µm) paste, dispersant of the invention (SL c. pH ox), unmodified lignin (SL), reference dispersants (DISPEX AA4140 and Marasperse AG). Figure 5: results with constant 0.12% dispersant dosage. Figure 6: 0.01% dosage.

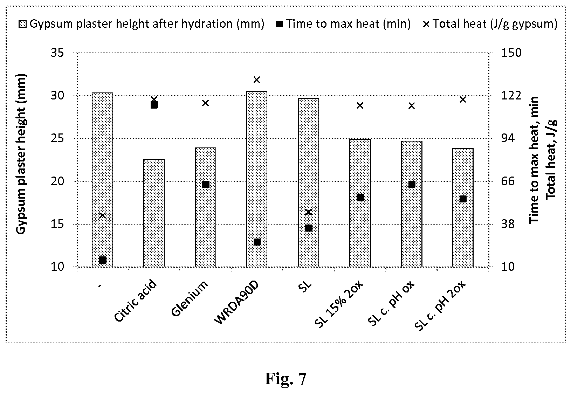

Figure 7 is a chart illustrating gypsum plaster height after hydration (mm), time to maximum heat (min) and the total heat during the hydration (J/g gypsum). Gypsum contains 0.5 w% of the dispersants of the present invention (SL 15% 2ox, SL c. pH ox, SL c. pH 2ox), and unmodified lignin (SL) or reference products (citric acid, Glenium, WRDA 90D) or no dispersant (-).

Thus, one aspect of the present invention is to disclose the dispersing performance of the alkali-O₂ oxidized lignins in different inorganic pigment pastes. Reference is made to examples and figures of the present specification.

A dispersant comprising alkali-O₂ oxidized lignin is described. Such dispersant is in a form of an aqueous solution and has a lignin content of 0.5-40 w-%, more preferably 5-25 w-%. Furthermore the dispersant is characterized by being a water-soluble polyelectrolyte and having surface active properties.

Alkali-O₂ oxidation increases lignin hydrophilicity i.e. solubility, which is particularly advantageous for dispersing applications. Oxidized lignins are more soluble even though their molecular weight has increased when compared to the unmodified lignin. Unmodified soda wheat straw lignin is only soluble above pH 7, while alkali-O₂ oxidized lignin is already soluble above pH 4 or above pH 5. The results indicate that oxidized lignins are also suitable for dispersing applications in the acidic pH range. According to one embodiment, the dispersant is soluble in pH-areas above 3-4.

The method for alkali-O₂ oxidation of the starting lignin material is described in WO 2015/049424.

According to one embodiment, the alkali-O₂ oxidized lignin samples have negative charge, which is originated from carboxylic structures and resonance stabilized quinone enol structures (i.e. acidic hydroxyl-p-quinones) in said lignin polymer. Part of the charge is due to the acidic, small molecular reaction products of lignin.

Furthermore, one embodiment of the present invention is a pigment mixture or a pigment composition comprising the alkali-O₂ oxidized lignin as a dispersant. The pigment mixture or composition has such dispersant content of 0.01-5 w-%, more preferably 0.1-2 w-% of the pigment mixture or composition. In particular, the pigment is inorganic.

A method for dispersing inorganic pigments also belongs to the scope of the present invention. Such method comprises applying 0.01-5 w-%, more preferably 0.1-2 w-% of an alkali-O₂ oxidized lignin solution into a pigment mixture, and thereby reducing interactions between pigment particles and lowering viscosity of the pigment mixture.

Inventors of the present invention have found out that the alkali-O₂ oxidized lignin is at least equally as good dispersant as a typical synthetic dispersant, when used at least 1.5 times, such as 2 times more than said synthetic dispersant. Further observations conclude that the present alkali-O₂ oxidized lignin is clearly better dispersant than non-oxidized lignin or lignosulfonate-based dispersant when used in same amounts. These findings are also described in the examples below.

Another aspect of the present invention is to disclose the performance of alkali-O₂ oxidized lignin for plasticization and retarding of raw gypsum in comparison to traditional commercial plasticizers and set-retardants, such as citric acid (CA), tartaric acid (TA) and lignosulfonate. Reference is made especially to example 5 and figure 7 of the present specification.

Herein gypsum is intended to cover its dihydrate (CaSO₄*2H₂O), hemihydrate (CaS0₄*O.5H₂O) and anhydrate (CaSO₄) forms. It was observed by the inventors, that modified lignins of the present invention worked well under slightly acidic conditions (at about pH 6), whereas for example tartaric acid functions only at pH 9 or higher. Citric acid is a good plasticizer and retarder for acidic gypsum mix. However, in some cases both qualities might not be desired. For example, gypsum mortars might benefit from high dispersion state (high workability and density), whereas porous gypsum might need only retarding effect. Such effects can be modified in alkali-O₂ oxidized lignins by altering the oxidation process.

A construction material comprising the alkali-O₂ oxidized lignin as a dispersant is described.

The construction material has such dispersant content of 0.1-5 w-%, more preferably 0.1-2 w-% of the construction material. In particular, the construction material is gypsum-based, such as gypsum mortar or gypsum plasterboard.

Furthermore, a method for gypsum plasticization and hydration retarding is described. Such method comprises mixing 0.1-5 w-%, more preferably 0.1-2 w-% of an alkali-O₂ oxidized lignin solution together with gypsum, and thereby dispersing gypsum particles and also slowing down the hydration effect.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application as dispersants for inorganic pigments in paint and coating industry (for example for decorative coatings, industrial coatings, automotive coatings, as well as printing ink and packaging applications), in construction materials, in paper and board industry and in plastics. Another suitable application area is additives, for example in pigment mining, grinding, and storage. Inorganic pigments comprise for example TiO₂, color-pigments, different forms of gypsum, clay, CaCO₃ and carbon black. In addition to the plasticizing function, in gypsum (such as gypsum plaster, gypsum wall board and gypsum molds) the alkali-O₂ lignins can be used as a retardant agent to slow down the typical fast reaction (hydration) of the material.

### EXAMPLES - MATERIALS AND METHODS

Production and characteristics of the oxidized lignin samples:
The alkali-O₂ oxidations were conducted and the samples were characterized as described in WO2015/049424 (examples 1, 2, 5 and 6). The oxidation method and the sample characteristics have also been recently published by Kalliola *et al.* (2015). The alkali-O₂ oxidation treatment increases the water solubility of lignin, thus converting it desirable for dispersing applications. In addition, the molecular weight of the lignin can be controlled using the oxidation parameters, especially by the pH.

Description of lignin samples, reference products, and inorganic pigments used in the examples are shown in the summary tables 1-3 below.

**Table 1. Lignin samples (oxidized lignins i.e. dispersants of the invention and unmodified lignins) used in the following examples.**

| Sample code | Description of sample | Mw (g mol⁻¹) | Mₙ (g mol⁻¹) | M_{w}/Mₙ | Negative charge at pH 6 (mmol g⁻¹) |
|---|---|---|---|---|---|
| SL | Commercial soda wheat straw lignin*, unmodified | 3880 | 2070 | 1.9 | 1.5 |
| SL 25% 1ox | Commercial soda wheat straw lignin, oxidized | 7320 | 2600 | 2.8 | 3.4 |
| SL 15% 2ox | " | 6270 | 2390 | 2.6 | 5.1 |
| SL constant pH ox | " | 4580 | 2020 | 2.3 | 6.5 |
| SL constant pH 2ox | " | 3200 | 1650 | 1.9 | 6.9 |
| IndAT | Commercial softwood kraft lignin**, unmodified | 4500 | 2100 | 2.1 | n.d. |
| IndAT c. pH ox | Commercial softwood kraft lignin, oxidized | 9670 | 2850 | 3.4 | n.d. |

| | | | | | |
|---|---|---|---|---|---|
| *Protobind^{™} 1000 by GreenValue SA, **Indulin at by MeadWestvaco Corp. n.d. not determined. | | | | | |

**Table 2. Reference products (dispersants, plasticizers, chemical) used in the following examples.**

| Sample code | Description of sample | M_{w} (g mol⁻¹) | Mₙ (g mol⁻¹) | M_{w}/Mₙ |
|---|---|---|---|---|
| WRDA 90D | Commercial lignosulfonate-based plasticizer | 3000 | 1700 | 1.8 |
| Marasperse AG | Commercial lignosulfonate-based dispersant | n.d. | n.d. | n.d. |
| Glenium | Commercial synthetic superplasticizer, Glenium C151 | 15900 | 5100 | 3.1 |
| DISPEX AA140 | Commercial synthetic dispersant | 4510 | 1770 | 2.5 |
| Citric acid | Chemical used as gypsum plasticizer and retarder, C₆H₈O₇ | 192 | | |

**Table 3. Pigments used in the following examples.**

| Pigment | Description of pigment | Supplier | Mean particle size (µm) | pH in paste (-) |
|---|---|---|---|---|
| PCC | Precipitated Calcium Carbonate, CaCO₃ | CALOFORT^{®}U by Specialty Minerals Inc. | 0.1 | 9.6 |
| Titanium dioxide | TiO₂ | Uula varipigmentti by Uula | 1.4 | 8.4 |
| Kaolin | Aluminum silicate, Al₂Si₂O₅(OH)₄ | by Aquaminerals | 2 | 6.7 |
| Kaolin | Aluminum silicate | by Aquaminerals | 10 | 6.3 |
| Gypsum | β-hemihydrate, CaSO₄*₀.5H₂O | by Knauf | n.d. | 6.0 |

Dispersing performance of the oxidized lignins in different inorganic pigment pastes (examples 1-3):
Dispersing performance of the oxidized lignin solutions (dispersants of the invention) was evaluated in different inorganic pigment pastes in laboratory scale. Pigment and water were mixed efficiently using Heidolph DIAX 600 for 2 min. Thereafter, the oxidized lignin solutions were added in the paste and the mixing was continued for 2 min. Unmodified lignins and reference products were used in comparison. The pastes contained 34 to 70 w-% of pigment in water (including the dispersant solution). Dispersant dosages of 0.04-1.0 w-% (active matter) of pigment were used. The fluidity of the pastes was evaluated by measuring the shear stress as a function of shear rate by using a rheometer, Bohlin Visco. In general, the lower the shear stress, the better is the dispersing of the pigment particles.

Pastes were mixed with magnetic stirrer and ultrasound (Hielscher UP400S) with two 30 seconds sonication periods. Total mixing time was 2 minutes. Prepared pastes were measured with (Rheotest RN, measuring cell S1) rheometer. First experiments had constant 0.12% dispersion agent dosage (example 4).

Plasticization and reaction retarding performance of the oxidized lignins in raw gypsum (β-hemihydrate) paste (example 5):
Oxidized lignin solutions (dispersants of the invention) were used for gypsum paste plasticization and hydration retarding. Water and dispersants were mixed together. Thereafter, water/dispersant -solution was mixed with gypsum in 1:1 -ratio vigorously for 30 seconds. Dispersant dosage of 0.5 w-% (active matter) of gypsum was used. Unmodified lignin and reference products were used in comparison. Immediately after mixing, the gypsum paste samples were placed into conduction calorimeter (TAM-Air). Hydration of hemihydrate is a highly exothermic reaction:

CaSO₄*0.5H₂O + 1.5H₂O → CaSO₄*2H₂O + Q

Gypsum hydration kinetics was followed by measuring heat flow of the paste. Time for maximum heat evolution and total heat content were measured. Also, the gypsum plaster height was measured after the complete hydration. Dispersant retardation effect was determined from the time to maximum heat evolution. Longer the time to reach maximum heat flow, greater is the retardation effect. Total evolved heat was used to evaluate total hydration degree. More heat the gypsum is able to generate, higher is the hydration degree. Gypsum plaster height presents the dispersant ability to disperse gypsum particles. Lower the plaster height, better the dispersing of the particles.

### EXAMPLE 1

### PCC (Precipitated Calcium Carbonate, CaCO₃) 34 w-% in water (including dispersant solution)

Dispersants of the invention decreased the yield stress in PCC paste demonstrating the dispersing performance. With a dose of 1.0 w-% on pigment, SL 25% 1ox provided roughly the same yield stress than commercial synthetic dispersant (DISPEX AA140) with a dose of 0.25 w-%. The constant pH oxidation indicated also to be a means of producing an efficient dispersant: with a dose of 1.0 w-%, IndAT c. pH ox showed equal performance than DISPEX AA140 with a dose of 0.5 w-%. The dispersing performance of commercial lignosulfonate (Marasperse AG) was clearly lower than that of the oxidized lignin. Unmodified lignins were not providing decent dispersing effect (figure 1).

### EXAMPLE 2

### Titanium dioxide (TiO₂) 70 w-% in water (including dispersant solution)

Dispersant of the invention (SL c. pH ox) decreased the yield stress in TiO₂ paste clearly better than the unmodified lignin (SL): about 45 Pa vs. 160 Pa with an equal dosing of 0.06%. The dispersing performance of SL c. pH ox was almost the same with a dosage of 0.06% than in the case of DISPEX AA4140 with 0.05%. Marasperse AG (0.05%) did not plasticize the paste enough, and thus the yield stress was too high to be measured.

In PCC paste (Example 1), the dispersants of the invention (SL 25% 1ox, IndAT c. pH ox) functioning well had clearly higher molecular mass (Mw) if comparing to the results in the case of TiO₂ paste, wherein the dispersant of the invention (SL c. pH ox) having rather low Mw showed high dispersing performance (figure 2).

### EXAMPLE 3

### Kaolin (Aluminum silicate, average particle size 2 µm) 50 w-% in water (including dispersant solution)

Dispersants of the invention (SL c. pH ox) decreased the yield stress in kaolin more than the unmodified lignin (SL). With a dose of 0.12 w-% on pigment, SL c. pH ox provided roughly the same yield stress than commercial synthetic dispersant (DISPEX AA140) with a dose of 0.08 w-% (figure 3).

After 3 days of preparing the kaolin paste with the dispersant of the invention (SL c. pH ox, 0.12%) the paste turns stable by light shaking. In the case of the reference dispersant (DISPEX AA4140, 0.12%) the paste could not be turned to a stable form by heavy shaking (since most of the pigments had settled/packed in the bottom of the plastic tube, figure 4).

### EXAMPLE 4

### Kaolin (Aluminium silicate, average particle size 10 µm) 50 w-% in water (including dispersant solution)

Oxidation of lignin improved dispersing effect slightly. Commercial lignosulfonate (Marasperse AG) had lower effect than the lignin samples, whereas commercial synthetic dispersant (DISPEX AA4140) had better dispersing effect (figure 5). Experiments were repeated with significantly smaller dispersant dosage (0.01%). Results are presented in figure 6. Oxidation of lignin had clear effect on dispersing efficiency. Dispersant of the invention (SL c. pH ox) decreased the yield stress (147 Pa) in kaolin paste more than the unmodified lignin (SL) (177 Pa); Yield stresses were calculated with Bingham -model.

### EXAMPLE 5

### Gypsum (CaSO₄*0.5H₂O) 50w% in water (including dispersant solution)

According to the results, WRDA90D and unmodified lignin were not able to disperse the gypsum particles. Citric acid, Glenium and oxidized lignins (dispersant of the invention) showed almost equally high performance to disperse gypsum (figure 7). Largest retardation effect was measured with citric acid, whereas Glenium and oxidized lignins had the same impact on retardation. Each dispersant also increased the total measured hydration degree. The results indicate that citric acid containing admixtures are beneficial when high retardation effect is needed. Gypsum plasters are potential applications were great retardation is desired. The use of oxidized lignins is beneficial when high dispersing effect is needed but great retardation is a disadvantage. Potential application in this case is e.g. wall board production. Smaller water content is desirable to produce a flowing plaster which curing demands less energy. Also, good dispersing will improve the wall board mechanical properties.

### CITATION LIST

### Patent Literature:

WO 2015/049424

### Non Patent Literature:

Kalliola, A., Vehmas, T., Liitiä, T., Tamminen, T., 2015. Alkali-02 oxidized lignin - A bio-based concrete plasticizer. Industrial Crops and Products 74, 150-157.

## Claims

1. A pigment mixture or composition comprising a dispersant, wherein the dispersant is a water soluble polyelectrolyte in pH areas above 3-4, has surface active properties and comprises alkali-O₂ oxidized lignin, having negative charge due to carboxylic structures and resonance stabilized quinone enol structures in lignin polymer, and wherein the dispersant content is 0.01-5 wt-% of the pigment mixture or composition.

2. The pigment mixture or composition of claim 1, wherein the dispersant is in a form of an aqueous solution and having a lignin content of 0.5-40 w-%, more preferably 5-25 w-%.

3. The pigment mixture or composition of claim 1 or 2, wherein the quinone enol structures are acidic hydroxyl-p-quinones.

4. The pigment mixture or composition of any preceding claims, wherein the pigment is an inorganic pigment.

5. A method for dispersing inorganic pigments, **characterized by** applying 0.01-5 w-% of an alkali-O₂ oxidized lignin solution into a pigment mixture, thereby reducing interactions between pigment particles and lowering viscosity of the pigment mixture.

6. Use of an alkali-O₂ oxidized lignin as a dispersant in inorganic pigments.

7. Use of the pigment mixture or composition according to any of claims 1 to 4 in paints and coatings, paper and board, constructions materials, printing inks and plastics.

## Patentansprüche

1. Pigmentmischung oder -zusammensetzung, die ein Dispergiermittel umfasst, wobei das Dispergiermittel ein wasserlöslicher Polyelektrolyt in pH-Wert-Bereichen über 3-4 ist, oberflächenaktive Eigenschaften aufweist und Alkali-O₂-oxidiertes Lignin umfasst, das aufgrund von carboxylischen Strukturen und resonanzstabilisierten Chinon-Enol-Strukturen in Ligninpolymer eine negative Ladung aufweist, und wobei der Dispergiermittelgehalt 0,01-5 Gew.-% der Pigmentmischung oder -zusammensetzung beträgt.

2. Pigmentmischung oder -zusammensetzung nach Anspruch 1, wobei das Dispergiermittel in Form einer wässrigen Lösung vorliegt und einen Ligningehalt von 0,5-40 Gew.-%, bevorzugter 5-25 Gew.-%, aufweist.

3. Pigmentmischung oder -zusammensetzung nach Anspruch 1 oder 2, wobei die Chinon-Enol-Strukturen saure Hydroxyl-p-chinone sind.

4. Pigmentmischung oder -zusammensetzung nach einem der vorstehenden Ansprüche, wobei das Pigment ein anorganisches Pigment ist.

5. Verfahren zum Dispergieren von anorganischen Pigmenten, **gekennzeichnet durch** Einbringen von 0,01-5 Gew.-% einer Alkali-O₂-oxidierten Ligninlösung in eine Pigmentmischung, wodurch Interaktionen zwischen Pigmentteilchen reduziert und die Viskosität der Pigmentmischung verringert wird.

6. Verwendung eines Alkali-O₂-oxidierten Lignins als ein Dispergiermittel in anorganischen Pigmenten.

7. Verwendung der Pigmentmischung oder -zusammensetzung nach einem der Ansprüche 1 bis 4 in Farben und Lacken, Papier und Pappe, Baumaterialien, Druckfarben und Kunststoffen.

## Revendications

1. Mélange de pigment ou composition comprenant un agent dispersant, dans lequel le dispersant est un poly-électrolyte soluble dans l'eau dans des zones de pH supérieur à 3-4, il présente des propriétés actives en surface et comprend une lignine oxydée en O₂ alcaline, présentant une charge négative due à des structures carboxyliques et à des structure d'énol-quinone stabilisées en résonance dans un polymère de lignine, et dans lequel la teneur en agent dispersant est de 0,01 à 5% en poids du mélange de pigment ou de la composition.

2. Mélange de pigment ou composition selon la revendication 1, dans lequel l'agent dispersant est sous une forme de solution aqueuse et présentant une teneur en lignine de 0,5 à 40% en poids, de préférence de 5 à 25% en poids.

3. Mélange de pigment ou composition selon la revendication 1 ou 2, dans lequel les structures d'énol-quinone sont des hydroxyl-p-quinones acides.

4. Mélange de pigment ou composition selon l'une quelconque des revendications précédentes, dans lequel le pigment est un pigment inorganique.

5. Procédé de dispersion de pigments inorganiques, **caractérisé par** l'application de 0,01 à 5% en poids d'une solution de lignine oxydée en O₂ alcaline dans un mélange de pigment, en réduisant ainsi des interactions entre des particules de pigment et en abaissant la viscosité du mélange de pigment.

6. Utilisation d'une lignine oxydée en O₂ alcaline en tant qu'agent dispersant dans des pigments inorganiques.

7. Utilisation du mélange de pigment ou composition selon l'une quelconque des revendications 1 à 4 dans des peintures et revêtements, du papier et carton, des matériaux de construction, des encres d'impression et des matières plastiques.
